# EUROPÄISCHE PATENTANMELDUNG

(11) **EP 4 523 923 A1**
(43) Veröffentlichungstag der Anmeldung: **19.03.2025**
(21) Anmeldenummer: 24193544.4
(22) Anmeldetag: 08.08.2024
(51) Int. Cl.: B42D 15/00, B42D 15/02, B42D 25/324, B42D 25/425, B42D 25/435, B42D 25/44, B42D 25/475

(54) **KARTENFÖRMIGER DATENTRÄGER UND VERFAHREN ZUR HERSTELLUNG EINES KARTENFÖRMIGEN DATENTRÄGERS**

(30) Priorität: 15.09.2023 DE 102023125072
(71) Anmelder: Giesecke+Devrient ePayments GmbH, 81677 München (DE)
(72) Erfinder: Tarantino, Thomas, 81677 München (DE); Tarantino, Peter, 81677 München (DE); Kohl, Klaus, 81677 München (DE)
(74) Vertreter: Giesecke+Devrient IP

(57) **Zusammenfassung**

Kartenförmiger Datenträger (1), mit einem Kartenkörper (10), welcher eine erste Kartenoberfläche (11), eine zweite Kartenoberfläche (12) und einen umlaufenden Rand (13) aufweist. Der umlaufende Rand (13) verbindet die erste Kartenoberfläche (11) mit der zweiten Kartenoberfläche (12). Der umlaufende Rand (13) weist ferner einen ersten Randabschnitt (13a) mit mindestens einer Aussparung (14) auf, wobei die mindestens eine Aussparung (14) zumindest teilweise mit einem Farbmaterial (15) gefüllt ist, um somit einen Farbeffekt für den ersten Randabschnitt (13a) bereitzustellen. Die Aussparung kann in Form einer länglichen Vertiefung vorgesehen sein, die sich parallel zu den Kartenoberflächen erstreckt.

## Beschreibung

### Gebiet der Erfindung

Die vorliegende Erfindung betrifft die Bereitstellung von Farbeffekten bei kartenförmigen Datenträgern. Insbesondere betrifft die Erfindung einen kartenförmigen Datenträger, die Verwendung eines solchen kartenförmigen Datenträgers als Ausweisdokument, Identitätsdokument, Chipkarte oder Bezahlkarte, sowie ein Verfahren zur Herstellung eines kartenförmigen Datenträgers.

### Hintergrund der Erfindung

Kartenförmige Datenträger werden heutzutage in einer Vielzahl von Anwendungsgebieten verwendet. Beispielsweise können solche Datenträger zum bargeldlosen Bezahlen von Waren oder Dienstleistungen, zur personenbezogenen Identitätsfeststellung oder für einen Zugang zu internetbasierten Anwendungsprogrammen eingesetzt werden. Dementsprechend gibt es zum Beispiel kartenförmige Datenträger in Form von Chipkarten im Allgemeinen, Zahlungskarten, wie beispielsweise Kreditkarten oder Debitkarten, sowie Personalausweis- oder Identitätskarten. Diese kartenförmigen Datenträger weisen üblicherweise einen Schichtaufbau auf, wobei Elektroniken, Spulen sowie Kontaktschnittstellen zur Kommunikation mit externen Lesegeräten in den Schichtaufbau integriert sind. Zudem werden kartenförmige Datenträger mit verschiedenen, nach außen sichtbaren Farben versehen, um einen Farbeffekt bzw. einen Farbeindruck für einen Betrachter des kartenförmigen Datenträgers bereitzustellen. Die Farben können dabei in Form von Druckschichten im kartenförmigen Datenträger oder aber als Bedruckungen auf einer Oberfläche des kartenförmigen Datenträgers vorgesehen sein.

Abnutzungserscheinungen, wie zum Beispiel ein Abrieb der Farbe an den Oberflächenbereichen, können den Farbeffekt jedoch im Laufe der Zeit vermindern.

### Beschreibung

Es ist eine Aufgabe der vorliegenden Erfindung, einen kartenförmigen Datenträger bereitzustellen, welcher einen Farbeffekt über längere Zeiträume beibehält.

Diese Aufgabe wird durch den Gegenstand der unabhängigen Ansprüche gelöst. Beispielhafte Ausführungsformen ergeben sich aus den abhängigen Ansprüchen und der nachfolgenden Beschreibung.

Gemäß einem Aspekt ist ein kartenförmiger Datenträger vorgesehen. Der kartenförmige Datenträger umfasst einen Kartenkörper, welcher eine erste Kartenoberfläche, eine zweite Kartenoberfläche und einen umlaufenden Rand aufweist. Der umlaufende Rand verbindet die erste Kartenoberfläche mit der zweiten Kartenoberfläche. Der umlaufende Rand weist einen ersten Randabschnitt mit mindestens einer Aussparung auf, wobei die mindestens eine Aussparung zumindest teilweise mit einem Farbmaterial gefüllt ist, um somit einen Farbeffekt für den ersten Randabschnitt bereitzustellen.

Mit dem erfindungsgemäßen kartenförmigen Datenträger ist es möglich, durch eine geometrische Formung eines Randbereichs des Kartenkörpers einen Aufnahmebereich zur Aufnahme des Farbmaterials bereitzustellen, der einen Schutz für das aufgenommene Farbmaterial bietet, sodass das Farbmaterial auch bei äußerer Beanspruchung weniger stark abgenutzt wird. Insbesondere werden genau definierte Aussparungen im Randbereich vorgesehen, in denen das Farbmaterial eingelagert ist, wobei die durch die Aussparungen gebildeten, vertieften Teilbereiche mittels angrenzender, hervorstehender Teile geschützt werden.

Im Allgemeinen werden kartenförmige Datenträger, insbesondere Bezahlkarten, täglich eingesetzt. Beispielsweise wird eine Kreditkarte oder eine Debitkarte in ein Kartenlesegerät eingeschoben, um eine Bezahlprozess einzuleiten. Beim Einschieben des kartenförmigen Datenträgers in ein Lesegerät kommen oftmals die Oberflächen, insbesondere die Kanten und Ränder, des kartenförmigen Datenträgers mit Teilen des Lesegeräts in Kontakt, was einen Abriebeffekt in diesen Bereichen des kartenförmigen Datenträgers fördert. Es kommt folglich im Laufe der Zeit zu Abnutzungserscheinungen, wobei Farbschichten auf der Oberfläche nach und nach abgetragen werden können. Auch beim bloßen Tragen einer Bezahlkarte im Portemonnaie kann es aufgrund der ständigen Bewegung der Karte im Portemonnaie zu einer Abnutzung kommen.

Um nun die Abnutzung des Farbmaterials jedenfalls im Randbereich des kartenförmigen Datenträgers zu reduzieren, ist das Farbmaterial beim erfindungsgemäßen kartenförmigen Datenträger in der mindestens einen Aussparung aufgenommen. Dies kann bedeuten, dass das Farbmaterial, zum Beispiel in Form eines Farbauftrags oder Farbeintrags, in die Aussparung eingebracht ist und dort eine Ansammlung des Farbmaterials bildet. Diese Ansammlung des Farbmaterials wird bei äußerer Beanspruchung weniger stark abgerieben, da es unwahrscheinlich ist, dass spitze Gegenstände in diese Aussparung eindringen und somit das Farbmaterial in der Aussparung beschädigen oder entfernen.

Die mindestens eine Aussparung kann eine Vielzahl von Aussparungen umfassen, die verteilt entlang des umlaufenden Randes angeordnet sind. Es ist jedoch auch möglich, dass lediglich eine einzige Aussparung vorgesehen ist, die sich teilweise oder vollständig entlang des umlaufenden Randes erstreckt.

Der umlaufende Rand kann durch mehrere Randabschnitte gebildet sein, welche zusammen eine Länge und eine Breite des Kartenkörpers definieren. In einer Draufsicht auf den Kartenkörper weist dieser beispielsweise eine Rechteckform auf. Der umlaufende Rand kann dabei die seitlichen Abschlüsse oder Enden des Kartenkörpers definieren, wobei der umlaufende Rand in Form einer Wand gebildet wird, die sich im Wesentlichen senkrecht zu der ersten Kartenoberfläche und/oder der zweiten Kartenoberfläche erstreckt. In dieser Wand des umlaufenden Randes kann die Aussparung in Form einer Vertiefung, Einkerbung, Rille, Mulde, Nut, etc. vorgesehen sein. Es können auch mehrere solcher geometrischen Ausformungen in dem umlaufenden Rand vorgesehen sein.

Der umlaufende Rand weist den ersten Randabschnitt auf, in welchem die mindestens eine Aussparung vorgesehen ist. Der Randabschnitt kann ein Teil des umlaufenden Randes sein, insbesondere ein gerade verlaufender Randabschnitt des Kartenkörpers, welcher ein erstes seitliches Ende des Kartenkörpers definiert.

Die mindestens eine Aussparung ist teilweise oder vollständig mit dem Farbmaterial gefüllt. Bei vollständiger Füllung mit dem Farbmaterial wird die Aussparung vollständig durch das Farbmaterial ausgefüllt, sodass eine Außenfläche des ersten Randabschnitts eine ebene bzw. glatte Form annimmt. Bei nicht vollständiger Füllung mit dem Farbmaterial kann ein vertiefter Teil der Aussparung nicht vollständig gefüllt sein, sodass seitliche Begrenzungen der Aussparung leicht vom Farbmaterial hervorstehen. Diese hervorstehenden Begrenzungen können von einem Benutzer des kartenförmigen Datenträgers erfühlt werden, sodass sich mittels der mit Farbmaterial teilweise gefüllten Aussparung auch ein haptischer Effekt für den Benutzer einstellt.

Das Farbmaterial kann eine Anordnung einer oder mehrerer Farbkomponenten enthalten. Mit anderen Worten kann das Farbmaterial dazu führen, dass ein Betrachter des kartenförmigen Datenträgers eine oder mehrere Farben im ersten Randabschnitt des Kartenkörpers wahrnimmt, wenn er den kartenförmigen Datenträger betrachtet. Auf diese Weise kann der Farbeffekt für den ersten Randabschnitt bereitgestellt werden. Für den Fall, dass mehrere Farbkomponenten in der Aussparung vorgesehen sind, kann der Betrachter verschiedene Farben in dem ersten Randabschnitt erkennen.

Vorteilhafterweise ist das Farbmaterial nicht einfach nur auf den Kartenkörperrand aufgebracht, sondern in die mindestens eine Aussparung des Kartenkörperrandes eingebracht, sodass das Farbmaterial besser vor äußeren mechanischen Einflüssen geschützt ist. Es können hierbei verschiedene Arten und Formen von Aussparungen vorgesehen sein, welche unten noch genauer erläutert werden.

Der kartenförmige Datenträger kann als ein Kartenelement betrachtet werden, das flächig ausgebildet sein kann und in mehreren Schichten aufgebaut sein kann, die in einem Laminierprozess bei der Herstellung des Kartenelements erzeugt werden. Auf diese Weise kann der Kartenkörper hergestellt werden. Zum Beispiel kann der Kartenkörper eine Basisstruktur sowie eine Oberflächenschicht, d.h. ein sog. Overlay, aufweisen. Der Kartenkörper kann ebenfalls eines oder eine Vielzahl von Sicherheitsmerkmalen, wie einen Sicherheitschip, im Bereich der Kartenelementoberfläche usw. umfassen.

Ebenso kann eine elektronische Kontaktschnittstelle vorgesehen sein, welche im Bereich der ersten Kartenoberfläche vorgesehen ist. Eine Spule oder ein Antennenelement kann ebenso in dem Kartenkörper eingebettet sein, um somit eine Kontaktlosschnittstelle des kartenförmigen Datenträgers bereitzustellen.

Gemäß einer Ausführungsform ist die mindestens eine Aussparung in Form einer Vertiefung in dem ersten Randabschnitt vorgesehen, die sich senkrecht zur ersten Kartenoberfläche und/oder zur zweiten Kartenoberfläche erstreckt.

Dabei kann eine Vertiefungswand der Vertiefung, die einen Abschluss des Kartenkörpers im ersten Randabschnitt darstellt, im Wesentlichen senkrecht zur ersten Kartenoberfläche und/oder zur zweiten Kartenoberfläche angeordnet sein. Die Wand kann dabei in Form einer Hälfte einer Zylindermantelfläche ausgebildet sein. Es können eine Vielzahl solcher senkrecht zur ersten und/oder zweiten Kartenoberfläche verlaufenden Vertiefungen bzw. Vertiefungswände im Randabschnitt vorgesehen sein.

Gemäß einer Ausführungsform ist die mindestens eine Aussparung in Form einer Vertiefung in dem ersten Randabschnitt vorgesehen, die sich von der ersten Kartenoberfläche zur zweiten Kartenoberfläche erstreckt.

Mit anderen Worten kann sich die Vertiefung und damit die senkrecht zu ersten und/oder zweiten Kartenoberfläche erstreckende Vertiefungswand über die gesamte Dicke des Katenkörpers hinweg erstrecken. In einer Draufsicht auf die erste und/oder zweite Kartenoberfläche wäre die Vertiefung daher durch eine seitliche Einkerbung oder Mulde sichtbar. Für den Fall, dass eine Vielzahl solcher Aussparungen in Form von entsprechenden Vertiefungen vorgesehen sind, kann sich für einen Betrachter bei einer Draufsicht auf die erste und/oder zweite Kartenoberfläche eine geriffelte Struktur im Bereich des ersten Randabschnitts des Kartenkörpers darbieten. Diese geriffelte Struktur kann letztlich auch einen haptischen Effekt für den Benutzer bereitstellen. Denn die hervorstehenden Bereiche dieser geriffelten Struktur können von dem Benutzer erfühlt werden, insbesondere wenn die Aussparungen nicht vollständig mit Farbmaterial gefüllt sind. Die durch mehrere aneinander angrenzende Aussparungen gebildete geriffelte Struktur kann sich entlang des gesamten umlaufenden Randes, das heißt entlang mehrerer Randabschnitte, erstrecken.

Gemäß einer Ausführungsform ist die mindestens eine Aussparung in Form einer länglichen Vertiefung in dem ersten Randabschnitt vorgesehen, die sich parallel zur ersten Kartenoberfläche und/oder zur zweiten Kartenoberfläche erstreckt.

Dabei kann eine Vertiefungswand der länglichen Vertiefung, die einen Abschluss des Kartenkörpers im ersten Randabschnitt darstellt, im Wesentlichen parallel zur ersten Kartenoberfläche und/oder zur zweiten Kartenoberfläche verlaufen. Die Wand kann dabei in Form einer länglichen Mulde, Rille oder Nut ausgebildet sein. In einer Seitenansicht mit Blickrichtung parallel zur ersten und/oder zweiten Kartenoberfläche wäre die längliche Vertiefung daher durch eine seitliche Mulde, Rille oder Nut sichtbar. Die längliche Vertiefung kann sich entlang des gesamten umlaufenden Randes, das heißt entlang mehrerer Randabschnitte, erstrecken.

Gemäß einer Ausführungsform weist die mindestens eine Aussparung in einem Querschnitt parallel zur ersten Kartenoberfläche und/oder zur zweiten Kartenoberfläche eine gekrümmte Form, eine rechteckige Form oder eine dreieckige Form auf. Die gekrümmte Form kann dabei eine Halbkreisform oder eine Parabelform aufweisen. Zusätzlich oder alternativ dazu weist die mindestens eine Aussparung in einem Querschnitt senkrecht zur ersten Kartenoberfläche und/oder zur zweiten Kartenoberfläche eine gekrümmte Form, eine rechteckige Form oder eine dreieckige Form auf. Die gekrümmte Form kann dabei eine Halbkreisform oder eine Parabelform aufweisen.

Es können verschiedenste Formen für die Aussparung vorgesehen sein, wobei innerhalb der Aussparung das Farbmaterial geschützt aufgenommen bzw. eingelagert ist. Insbesondere kann die Aussparung derart ausgebildet sein, dass die Wahrscheinlichkeit, dass ein Gegenstand in die Aussparung eindringen kann und somit das Farbmaterial aus der Aussparung herauslösen kann, sehr gering ist. Wäre das Farbmaterial nämlich einfach nur auf einer ebenen Oberfläche bzw. Außenfläche eines Kartenkörperrandes aufgebracht, so würde bei jedem Kontakt mit Gegenständen aus der Umgebung möglicherweise ein Teil des Farbmaterials abgelöst werden. Der erfindungsgemäße kartenförmige Datenträger kann genau diesem Nachteil effektiv entgegenwirken, da das Farbmaterial geschützt innerhalb der Aussparung oder der Aussparungen angeordnet ist.

Gemäß einer Ausführungsform ist die mindestens eine Aussparung durch einen abgesenkten Teil und zwei hervorstehende Teile definiert, wobei die zwei hervorstehenden Teile an den abgesenkten Teil angrenzen und wobei das Farbmaterial zumindest in dem abgesenkten Teil vorgesehen ist.

Diese Art der Ausformung der Aussparung schützt das Farbmaterial im ersten Randabschnitt des kartenförmigen Datenträgers vor Abnutzung bzw. Abrieb. Die beiden hervorstehenden Teile sowie der abgesenkte Teil können durch Begrenzungswände der Aussparung gebildet sein, wobei die Begrenzungswände die Aussparung an sich definieren.

Die hervorstehenden Teile schirmen den abgesenkten Teil quasi ab, sodass ein Gegenstand, der sich dem Randabschnitt des Kartenkörpers nähert, zuerst mit einem oder beiden hervorstehenden Teilen in Kontakt kommen würde. Der Gegenstand gelangt daher nicht oder zumindest nicht vollständig bis in den abgesenkten Teil hinein, sodass der Gegenstand nicht oder nur in einem geringen Ausmaß mit dem Farbmaterial in Kontakt kommt und dieses möglicherweise aus dem abgesenkten Teil herauslöst.

Gemäß einer Ausführungsform weist der erste Randabschnitt eine Vielzahl von Aussparungen auf, die in regelmäßigen Abständen zueinander entlang des ersten Randabschnitts angeordnet sind, wobei jede Aussparung der Vielzahl von Aussparungen zumindest teilweise mit einem Farbmaterial gefüllt ist, um somit den Farbeffekt für den ersten Randabschnitt bereitzustellen.

Es kann vorgesehen sein, dass jede Aussparung der Vielzahl von Aussparungen vollständig mit dem Farbmaterial gefüllt ist, um somit den Farbeffekt für den ersten Randabschnitt bereitzustellen. Insbesondere können eine durch das Farbmaterial gebildete Außenfläche und nach außen gerichtete Oberflächen der hervorstehenden Teile der Aussparung bündig verlaufen. Der erste Randabschnitt kann somit eine vollflächig ebene oder glatte Oberfläche bilden. Jedoch kann auch vorgesehen sein, dass die nach außen gerichteten Oberflächen der hervorstehenden Teile durch Farbmaterial abgedeckt sind. Ebenso kann vorgesehen sein, dass die nach außen gerichteten Oberflächen der hervorstehenden Teile leicht aus dem Farbmaterial herausragen, sodass sich eine geriffelte Struktur im ersten Randabschnitt ergibt, was wiederum einen haptischen Effekt für den Benutzer erzielt.

Gemäß einer Ausführungsform weist der umlaufende Rand den ersten Randabschnitt, einen zweiten Randabschnitt, einen dritten Randabschnitt und einen vierten Randabschnitt auf, wobei der erste Randabschnitt bezüglich des Kartenkörpers dem dritten Randabschnitt gegenüberliegt und wobei der zweite Randabschnitt bezüglich des Kartenkörpers dem vierten Randabschnitt gegenüberliegt.

Der Kartenkörper kann mit anderen Worten vier geradlinig verlaufende Randbereiche aufweisen, wobei in jedem Randbereich ein Randabschnitt vorgesehen ist oder jeder Randbereich einen Randabschnitt bildet. Die vier Randabschnitte können gemeinsam den umlaufenden Rand des Kartenkörpers bilden. Die Merkmale und Eigenschaften, die zuvor und im Folgenden in Bezug auf den ersten Randabschnitt erläutert sind, können auch für den zweiten, dritten und vierten Randabschnitt gelten. Insbesondere können in einigen oder mehreren der genannten Randabschnitte mindestens eine Aussparung oder aber eine Vielzahl von Aussparungen, wie hierin beschrieben, vorgesehen sein.

Gemäß einer Ausführungsform erstreckt sich die zumindest eine Aussparung entlang des ersten Randabschnitts, des zweiten Randabschnitts, des dritten Randabschnitts und des vierten Randabschnitts.

Die Aussparung kann dabei eine längliche Aussparung in Form einer Nut, Rille oder Mulde sein, die sich parallel zur ersten und/oder zweiten Kartenoberfläche erstreckt. Da der erste, zweite, dritte und vierte Randabschnitt gemeinsam den umlaufenden Rand bilden können, kann sich die längliche Aussparung entlang des gesamten umlaufenden Randes erstrecken. Auf diese Weise kann das Farbmaterial entlang des gesamten umlaufenden Randes in der sich dort erstreckenden Aussparung vorgesehen werden, sodass der Farbeffekt am gesamten umlaufenden Randbereich des Kartenkörpers bereitgestellt wird.

Gemäß einer Ausführungsform ist das Farbmaterial eine ultraviolettstrahlungshärtende (UV-härtende) Druckfarbe. Die Farbe kann also mittels eines Druckverfahrens in den Randabschnitt eingebracht sein. Ein Sprühverfahren oder ein Lackierverfahren, zum Beispiel Tauchlackierung, sind jedoch ebenfalls möglich.

Gemäß einem Aspekt ist eine Verwendung des hierin beschriebenen kartenförmigen Datenträgers als Ausweisdokument, Identitätsdokument, Chipkarte oder Bezahlkarte vorgesehen.

Gemäß einem Aspekt ist ein Verfahren zur Herstellung eines kartenförmigen Datenträgers vorgesehen. In einem Schritt des Verfahrens wird ein Kartenkörper bereitgestellt, welcher eine erste Kartenoberfläche, eine zweite Kartenoberfläche und einen umlaufenden Rand aufweist, wobei der umlaufende Rand die erste Kartenoberfläche mit der zweiten Kartenoberfläche verbindet. In einem weiteren Schritt wird mindestens eine Aussparung in einem ersten Randabschnitt des umlaufenden Randes vorgesehen. In einem weiteren Schritt wird ein Farbmaterial in die mindestens eine Aussparung eingebracht, um somit einen Farbeffekt für den ersten Randabschnitt bereitzustellen, welcher für einen Benutzer des kartenförmigen Datenträgers wahrnehmbar ist. Die Verfahrensschritte können in der angegebenen Reihenfolge durchgeführt werden.

Gemäß einer Ausführungsform erfolgt das Vorsehen der mindestens einen Aussparung in dem ersten Randabschnitt des umlaufenden Randes während eines Ausstanzens des Kartenkörpers.

Dabei kann der Kartenkörper aus einem Kartenkörperhalbzeug ausgestanzt werden, wobei durch entsprechende Formung des Stanzwerkzeugs die Aussparungen gleichzeitig mit in den Kartenkörper eingebracht werden können.

Gemäß einer Ausführungsform erfolgt das Vorsehen der mindestens einen Aussparung in dem ersten Randabschnitt des umlaufenden Randes mittels eines Laserverfahrens oder eines Fräsverfahrens.

Beispielsweise können die Aussparungen durch Fräsen oder Lasern in den ersten Randabschnitt eingebracht werden, nachdem der Kartenkörper aus dem Kartenkörperhalbzeug ausgestanzt wurde.

Gemäß einer Ausführungsform erfolgt das Einbringen des Farbmaterials in die mindestens eine Aussparung mittels eines Druckverfahrens oder eines Sprühverfahrens.

Das Einbringen des Farbmaterials kann nach dem Vorsehen der mindestens einen Aussparung in dem Randabschnitt erfolgen.

### Kurze Beschreibung der Figuren

- Fig. 1: zeigt eine Draufsicht auf eine erste Kartenoberfläche eines Kartenkörpers eines kartenförmigen Datenträgers.
- Fig. 2: zeigt eine Seitenansicht des Kartenkörpers aus Fig. 1.
- Fig. 3: zeigt eine Draufsicht auf einen Teil der ersten Kartenoberfläche aus Fig. 1, mit Farbauftrag in einem Randabschnitt des Kartenkörpers.
- Fig. 4: zeigt Aussparungen mit darin aufgenommenem Farbmaterial in einem Randabschnitt des Kartenkörpers aus Fig. 1.
- Fig. 5: zeigt eine Detailansicht zweier Aussparungen aus Fig. 4.
- Fig. 6: zeigt eine weitere Draufsicht auf den Kartenkörper aus Fig. 1.
- Fig. 7: zeigt eine Querschnittsansicht des Kartenkörpers aus Fig. 6.
- Fig. 8: zeigt einen beispielhaften Querschnitt eines Randabschnitts des Kartenkörpers aus Fig. 6.
- Fig. 9: zeigt einen weiteren beispielhaften Querschnitt eines Randabschnitts des Kartenkörpers aus Fig. 6.
- Fig. 10: zeigt ein Werkzeug zur Herstellung des Kartenkörpers der Figuren 4 und 5.
- Fig. 11: zeigt ein Werkzeug zur Herstellung des Kartenkörpers der Figur 7 sowie einen entsprechenden Querschnitt eines Werkzeugteils.
- Fig. 12: zeigt ein Flussdiagramm für ein Verfahren zur Herstellung eines kartenförmigen Datenträgers.

### Detaillierte Beschreibung beispielhafter Ausführungsformen

Die Darstellungen in den Figuren sind schematisch und nicht maßstäblich. Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

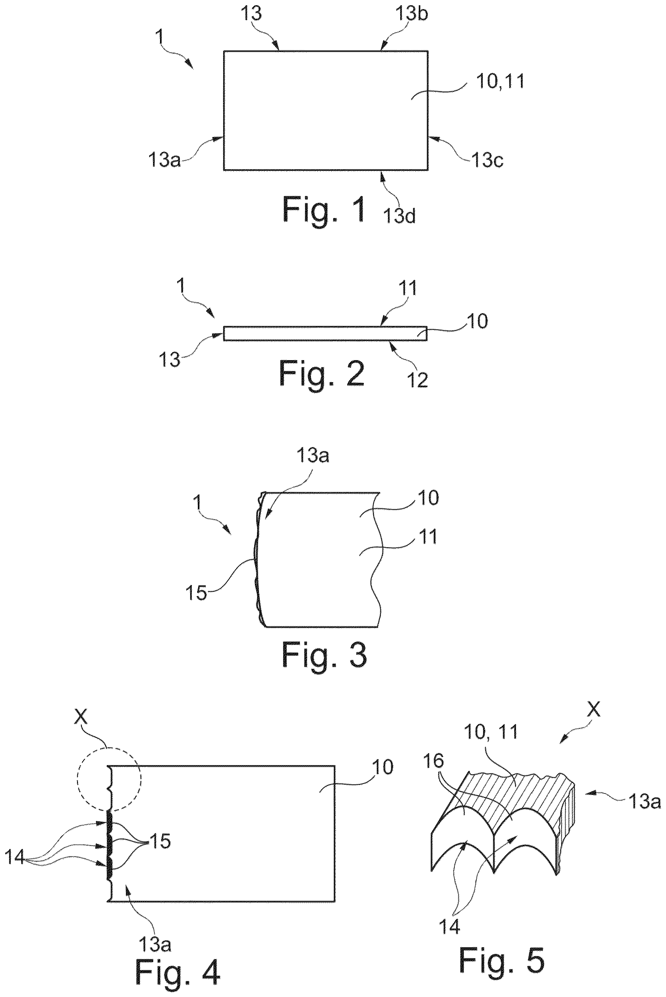

Fig. 1 zeigt eine Draufsicht auf eine erste Kartenoberfläche 11 eines Kartenkörpers 10 eines kartenförmigen Datenträgers 1. Der Kartenkörper 10 weist einen umlaufenden Rand 13 auf, welcher durch vier geradlinig verlaufende Randabschnitte 13a, 13b, 13c, 13d gebildet wird. Der umlaufende Rand 13 umfasst insbesondere einen ersten Randabschnitt 13a, einen zweiten Randabschnitt 13b, einen dritten Randabschnitt 13c und einen vierten Randabschnitt 13d. Diese vier Randabschnitte 13a, 13b, 13c, 13d definieren gemeinsam den umlaufenden Rand 13. Der erste Randabschnitt 13a liegt relativ zum Kartenkörper 10 dem dritten Randabschnitt 13c gegenüber und der zweite Randabschnitt 13b liegt relativ zum Kartenkörper dem vierten Randabschnitt 13d gegenüber. Es wird das in Fig. 1 gezeigte Kartenformat gebildet, beispielsweise ein ID-1-Format.

Fig. 2 zeigt eine Seitenansicht des Kartenkörpers 10 des kartenförmigen Datenträgers 1 aus Fig. 1, wobei nur ein Teil des umlaufenden Randes 13 dargestellt ist. Wie zu erkennen ist, weist der Kartenkörper 10 eine erste Kartenoberfläche 11 und eine zweite Kartenoberfläche 12 auf, wobei der umlaufende Rand 13 die erste Kartenoberfläche 11 mit der zweiten Kartenoberfläche 12 verbindet.

Fig. 3 zeigt eine Draufsicht auf einen Teil der ersten Kartenoberfläche 11 aus Fig. 1, mit Farbmaterial 15 bzw. Farbauftrag in dem ersten Randabschnitt 13a des Kartenkörpers 10. Der unregelmäßige Linienverlauf im Bereich des ersten Randabschnitts 13a soll einen Farbmaterialabtrag in einigen Teilbereichen des ersten Randabschnitts 13a verdeutlichen. Solche Abtragungen oder Abrieb sind das Resultat einer fortwährenden Beanspruchung des kartenförmigen Datenträgers 1 im Alltag. Die Kante bzw. der Rand kann uneben sein und die aufgebrachte Farbe ist mechanischen Beanspruchungen im täglichen Gebrauch des kartenförmigen Datenträgers 1 ausgesetzt. Beispielswiese beim Einführen des kartenförmigen Datenträgers 1 in einen Kartenleser wird die Kante bzw. der Rand des Kartenkörpers 10 des kartenförmigen Datenträgers 1 mechanisch stark beansprucht und die Farbe wird dadurch allmählich abgetragen. Erfindungsgemäß sollen nun eine oder mehrere Aussparungen im Bereich des ersten Randabschnitts 13a, oder aber im Bereich der weiteren Randabschnitte 13b, 13c, 13d des Kartenkörpers 10 vorgesehen werden, wobei das Farbmaterial in diesen Aussparungen aufgenommen bzw. eingelagert ist.

Fig. 4 zeigt Aussparungen 14 mit darin aufgenommenem bzw. eingelagertem Farbmaterial 15 in dem ersten Randabschnitt 13a des Kartenkörpers 10 aus Fig. 1. Es ist zu erkennen, dass die Aussparungen 14 bei der Draufsicht auf den Kartenkörper 10 eine geriffelte Struktur im ersten Randabschnitt 13a bilden. In dem in Fig. 4 dargestellten Beispiel sind genau drei benachbarte Aussparungen 14 mit Farbmaterial 15 gefüllt. Es sei jedoch verstanden, dass mehr oder weniger Aussparungen 14 im Randabschnitt 13a mit Farbmaterial 15 gefüllt sein können. Insbesondere können sämtliche Aussparungen 14 mit Farbmaterial 15 gefüllt sein.

Weiter ist in Fig. 4 zu erkennen, dass durch die Füllung der Aussparungen 14 mit Farbmaterial 15 eine im Wesentlichen ebene Oberfläche im Randabschnitt 13a entsteht. Mit anderen Worten können die Aussparungen 14 so mit Farbmaterial 15 gefüllt werden, dass eine im Wesentlichen ebene oder glatte Oberfläche im ersten Randabschnitt 13a entsteht. Ein gestrichelter Kreis in Fig. 4, der mit X bezeichnet ist, deutet auf einen Detailbereich des ersten Randabschnitts 13a hin, welcher in Bezug zur Fig. 5 genauer erläutert wird.

Fig. 5 zeigt nun die Detailansicht X aus Fig. 4. Die zwei Aussparungen 14 in dieser Detailansicht sind zu Erläuterungszwecken nicht mit Farbmaterial 15 gefüllt. Die beiden Aussparungen 14 sind in Form von Vertiefungen in dem ersten Randabschnitt 13a des Kartenkörpers 10 vorgesehen, wobei sich die Vertiefungen senkrecht zur ersten Kartenoberfläche 11, das heißt in Figur 5 von oben nach unten oder umgekehrt, erstrecken. In diesem Beispiel erstrecken sich die Vertiefungen sogar über die gesamte Dicke des Kartenkörpers 10, das heißt von der ersten Kartenoberfläche 11 bis zur in Fig. 5 nicht dargestellten zweiten Kartenoberfläche 12 (vgl. Fig. 2).

Die Vertiefungen können durch jeweilige Vertiefungswände 16 definiert sein, die einen äußeren Abschluss des Kartenkörpers 10 im ersten Randabschnitt 13a definieren. Die Vertiefungswände 16 sind hier ähnlich einer Halbzylindermantelfläche ausgebildet. Es können eine Vielzahl solcher senkrecht zur ersten und/oder zweiten Kartenoberfläche 11, 12 verlaufenden Vertiefungen bzw. Vertiefungswände 16 im ersten Randabschnitt 13a, oder aber auch in den weiteren Randabschnitten 13b, 13c, 13d (vgl. Fig. 1) vorgesehen sein.

Die Aussparungen 14 können z. B. während eines Ausstanzens des Kartenkörpers 10 aus einem Halbzeug erzeugt werden. Alternativ können die Aussparungen 14 erzeugt werden, nachdem der Kartenkörper 10 ausgestanzt bzw. vereinzelt worden ist, beispielsweise mittels Laser, Fräsen oder ähnlichen Verfahren. Anschließend kann das Farbmaterial 15 in die Aussparungen 14 eingebracht werden (vgl. Fig. 4). Das Farbmaterial 15 kann zum Beispiel mittels eines Sprühverfahrens oder mittels eines Digitaldruckers mit UV härtendem Farbsystem eingebracht werden. Das Farbmaterial 15 ist dann quasi versenkt in den Aussparungen 14 und dadurch besser gegen äußere mechanische Einflüsse geschützt. Die Aussparungen 14 in den Figuren 4 und 5 sind lediglich bespielhaft und können jede beliebige Form annehmen.

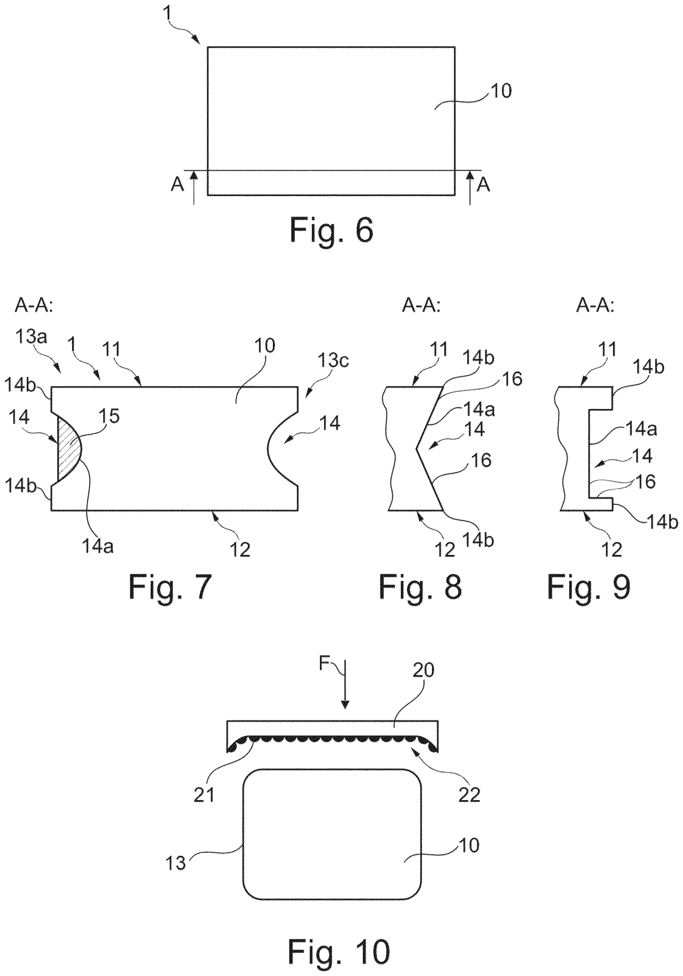

Fig. 6 zeigt eine weitere Draufsicht den Kartenkörper 10 aus Fig. 1, wobei hier eine Schnittlinie durch den Kartenkörper 10 des kartenförmigen Datenträgers 1 angedeutet ist. Diese Schnittlinie soll einen Schnitt A-A durch den Kartenkörper 10 anzeigen, der in Bezug auf Fig. 7 genauer erläutert wird.

Fig. 7 zeigt also die Querschnittsansicht A-A des Kartenkörpers 10 aus Fig. 6. In dem Querschnitt A-A durch den kartenförmigen Datenträger 1 ist der Kartenkörper 10, die erste Kartenoberfläche 11, die zweite Kartenoberfläche 12 und eine bzw. zwei Aussparungen 14 vorgesehen.

Im Falle einer einzigen Aussparung 14 erstreckt sich diese Aussparung 14 parallel zur ersten und zweiten Kartenoberfläche 11, 12 um den gesamten Kartenkörper 10 herum. In dem in Fig. 7 dargestellten Querschnitt A-A ist die Aussparung 14 jedoch nur im Bereich des ersten Randabschnitts 13a und im Bereich des gegenüberliegenden dritten Randabschnitts 13c zu erkennen. Die einzelne Aussparung 14 ist eine längliche Aussparung 14 in Form einer Mulde, Rille, Furche oder Nut, die sich entlang des umlaufenden Randes 3 des Kartenkörpers 10 vollständig um diesen herumerstreckt (vgl. Fig. 1).

Im Falle mehrerer Aussparungen 14 sind die links im ersten Randabschnitt 13a dargestellte Aussparung 14 und die rechts im dritten Randabschnitt 13c dargestellte Aussparung 14 zwei verschiedene Aussparungen 14. In diesem Fall erstreckt sich somit nicht eine einzelne Aussparung 14 um den gesamten Umfang des Kartenkörpers 10.

In Fig. 7 ist weiter zu erkennen, dass die im ersten Randabschnitt 13a vorgesehene Aussparung 14 teilweise mit Farbmaterial 15 gefüllt ist, um für einen Betrachter einen Farbeffekt im ersten Randabschnitt 13a bereitzustellen. Mit anderen Worten kann der Betrachter die durch das Farbmaterial 15 in der Aussparung 14 eingebrachte Farbe erkennen. Durch das Versenken des Farbmaterials 15 in der Aussparung 14 kann das Farbmaterial 15 besser gegen äußere Einflüsse, insbesondere gegen mechanische Einflüsse, geschützt werden.

Dieser Schutz kann dadurch gewährleistet werden, dass die Aussparung 14 durch einen abgesenkten Teil 14a und zwei hervorstehende Teile 14b definiert ist, wobei die zwei hervorstehenden Teile 14b an den abgesenkten Teil 14a angrenzen und das Farbmaterial 15 in dem abgesenkten Teil 14a angeordnet ist. Das Farbmaterial 15 ist somit quasi versenkt in dem abgesenkten Teil 14a eingelagert, wobei die benachbarten hervorstehende Teile 14b eine Art Abschirmung für das Farbmaterial 15 in dem abgesenkten Teil 14a bieten. Wird beispielsweise ein Gegenstand wie ein Kartenleser an den Kartenkörper 10 angenähert, so kommt dieser Gegenstand zuerst oder ausschließlich mit einem oder beiden der hervorstehenden Teile 14b in Kontakt. Der Gegenstand gelangt daher nicht oder zumindest nicht vollständig bis in den abgesenkten Teil 14a hinein, sodass der Gegenstand nicht oder nur in einem geringen Ausmaß mit dem Farbmaterial 15 in Kontakt kommt und dieses möglicherweise beschädigt oder aus dem abgesenkten Teil 14a herauslöst. Auch hier kann das Farbmaterial 15 zum Beispiel mittels eines Sprühverfahrens oder mittels eines Digitaldruckers mit UV härtendem Farbsystem eingebracht werden. Das Farbmaterial 15 ist dann quasi versenkt in der Aussparungen 14 und dadurch besser gegen äußere mechanische Einflüsse geschützt.

Fig. 8 zeigt einen beispielhaften Querschnitt eines Randabschnitts des Kartenkörpers 10 aus Fig. 1. Dieser Randabschnitt kann durch einen oder mehrere des ersten, zweiten, dritten oder vierten Randabschnitts 13a, 13b, 13c, 13d gebildet sein. Es sind die hervorstehenden Teile 14b und der abgesenkte Teil 14a zu erkennen, wobei die entsprechenden Wände 16 die Aussparung 14 definieren. Die Wände 16 können auch als Vertiefungswände 16 der Aussparung 14 bezeichnet werden. In Fig. 8 ist eine dreiecksförmige Aussparung 14 gezeigt, die sich im Randabschnitt zwischen der ersten und zweiten Kartenoberfläche 11, 12 erstreckt.

Fig. 9 zeigt einen weiteren beispielhaften Querschnitt des Randabschnitts des Kartenkörpers 10 aus Fig. 1. Dieser Randabschnitt kann durch einen oder mehrere des ersten, zweiten, dritten oder vierten Randabschnitts 13a, 13b, 13c, 13d gebildet sein. Es sind wiederum die hervorstehenden Teile 14b und der abgesenkte Teil 14a zu erkennen, wobei die entsprechenden Wände 16 die Aussparung 14 definieren. In Fig. 9 ist eine rechteckförmige oder nutförmige Aussparung 14 gezeigt, die sich im Randabschnitt zwischen der ersten und zweiten Kartenoberfläche 11, 12 erstreckt.

Fig. 10 zeigt ein Werkzeug 20 zur Herstellung des Kartenkörpers 10 aus den Figuren 4 und 5. Das Werkzeug 20 kann einen Stempel mit einer Prägeoberfläche 22 aufweisen, wobei die Prägeoberfläche 22 eine Vielzahl von Vorsprüngen 21, Ausstülpungen 21 oder Ausprägungen 21 aufweist, die letztlich die Form der Aussparungen 14, wie in den Figuren 4 und 5 dargestellt, im Kartenkörper 10 definieren. Das Werkzeug 20 kann beim Herstellungsprozess auf den ausgestanzten Kartenkörper 10 zubewegt werden und anschließend gegen den Rand 13 Kartenkörper 10 gedrückt werden. Hierzu wird die durch Pfeil gekennzeichnete Kraft F aufgebracht, wodurch die Vorsprünge 21 in einen Teil des umlaufenden Randes 13 des Kartenkörpers 10 eingedrückt werden.

In Fig. 10 ist nur eine Seite exemplarisch dargestellt. Es können vier Werkzeuge 20 vorgesehen sein, die jeweils die Aussparungen 14 in einem der Randabschnitte 13a, 13b, 13c, 13d erzeugen (vgl. Fig. 1). Es können aber auch zwei Werkzeuge 20 vorgesehen sein, die jeweils in L-Form so um den Kartenkörper 10 herum positioniert werden, dass eines der beiden Werkzeuge 20 die Aussparungen 14 zum Beispiel in den ersten Randabschnitt 13a und in den zweiten Randabschnitt 13b einbringt und das andere der beiden Werkzeuge 20 die Aussparungen 14 zum Beispiel in den dritten Randabschnitt 13c und in den vierten Randabschnitt 13d einbringt (vgl. nochmals Fig. 1).

Beim Herstellungsprozess kann das Werkzeug 20 stationär sein und der Kartenkörper 10 kann zum Werkzeug 20 hingedreht werden. In diesem Fall wird der Kartenkörper 10 zum Werkzeug 20 hingefahren, um die durch die Vorsprünge 21 vorgegebene Struktur in Form der Aussparungen 14 im Kartenkörper 10 vorzusehen. Die Form und die Ausprägung der Aussparungen 14 werden durch das Werkzeug 20, insbesondere durch die Vorsprünge 21, bestimmt. Die Prägung kann beim Herstellungsprozess kalt erfolgen oder das Werkzeug 20 kann beheizt sein oder mit Ultraschall aktiviert werden. Dies kann den Prägeprozess erleichtern.

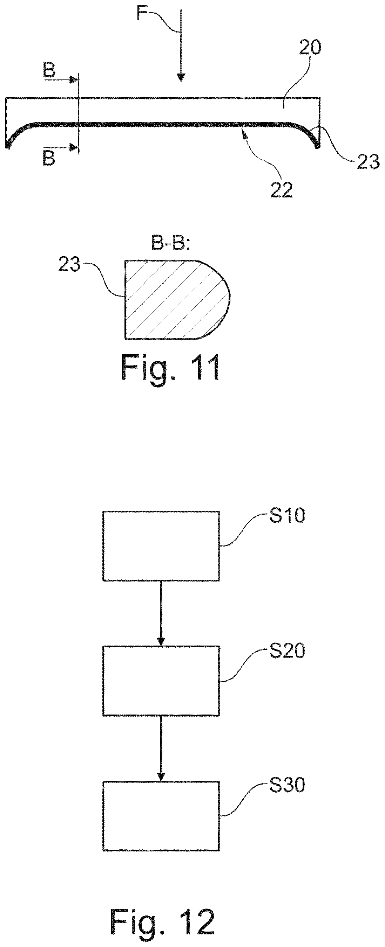

Fig. 11 zeigt ein Werkzeug 20 zur Herstellung des Kartenkörpers 10 aus der Figuren 7 sowie einen entsprechenden Querschnitt des Werkzeugs 20. Das Werkzeug 20 kann einen Stempel mit einer Prägeoberfläche 22 aufweisen, wobei die Prägeoberfläche 22 hier einen einzigen Vorsprung 23 aufweist, der letztlich die Form der einzelnen Aussparung 14, wie in Figur 7 dargestellt, im Kartenkörper 10 erzeugt. Das Werkzeug 20 kann beim Herstellungsprozess auf den ausgestanzten Kartenkörper 10 zubewegt werden und anschließend gegen den Rand Kartenkörper 10 gedrückt werden. Hierzu wird die durch Pfeil gekennzeichnete Kraft F aufgebracht, wodurch der Vorsprung 23 in den einen Teil des umlaufenden Randes 13 des Kartenkörpers 10 (vgl. Fig. 1) eingedrückt wird. Der Vorsprung 23 hat hier eine längliche abgerundete Form, was in der Schnittansicht B-B der Fig. 11 erkennbar ist. Zum Beilspiel ist der Vorsprung 23 halbkreisförmig.

In Fig. 11 ist nur eine Seite des Werkzeugs 20 exemplarisch dargestellt. Es können vier Werkzeuge 20 vorgesehen sein, die jeweils die Aussparungen 14 in den Randabschnitten 13a, 13b, 13c, 13d erzeugen. Es können aber auch zwei Werkzeuge 20 vorgesehen sein, die jeweils in L-Form so um den Kartenkörper 10 herum positioniert werden, dass eines der beiden Werkzeuge 20 einen ersten Teilabschnitt der Aussparung 14 zum Beispiel in den ersten Randabschnitt 13a und in den zweiten Randabschnitt 13b einbringt und das andere der beiden Werkzeuge 20 einen zweiten Teilabschnitt der Aussparung 14 zum Beispiel in den dritten Randabschnitt 13c und in den vierten Randabschnitt 13d einbringt (vgl. nochmals Fig. 1).

Beim Herstellungsprozess kann das Werkzeug 20 stationär sein und der Kartenkörper 10 kann zum Werkzeug 20 hingedreht werden. In diesem Fall wird der Kartenkörper 10 zum Werkzeug 20 hingefahren, um die durch den Vorsprung 23 vorgegebene Struktur in Form der Aussparung 14 im Kartenkörper 10 vorzusehen. Die Form und die Ausprägung der Aussparung 14 wird durch das Werkzeug 20, insbesondere durch den Vorsprung 23, bestimmt. Die Prägung kann beim Herstellungsprozess kalt erfolgen oder das Werkzeug 20 kann beheizt sein oder mit Ultraschall aktiviert werden. Dies kann den Prägeprozess erleichtern.

Fig. 12 zeigt ein Flussdiagramm für ein Verfahren zum Herstellen eines kartenförmigen Datenträgers, zum Beispiel zur Herstellung des kartenförmigen Datenträgers 1 aus Fig. 1. In einem Schritt S10 des Verfahrens erfolgt ein Bereitstellen eines Kartenkörpers 10, welcher eine erste Kartenoberfläche 11, eine zweite Kartenoberfläche 12 und einen umlaufenden Rand 13 aufweist, wobei der umlaufende Rand 13 die erste Kartenoberfläche 11 mit der zweiten Kartenoberfläche 12 verbindet. In einem Schritt S20 des Verfahrens erfolgt ein Vorsehen mindestens einer Aussparung 14 in einem ersten Randabschnitt 13a des umlaufenden Randes 13. In einem Schritt S30 des Verfahrens erfolgt ein Einbringen eines Farbmaterials 15 in die mindestens eine Aussparung 14, um somit einen Farbeffekt für den ersten Randabschnitt 13a bereitzustellen.

Das Vorsehen der mindestens einen Aussparung 14 in dem ersten Randabschnitt 13a des umlaufenden Randes 13 kann während eines Ausstanzens des Kartenkörpers 10 aus einem Kartenhalbzeug erfolgen.

Das Vorsehen der mindestens einen Aussparung 14 in dem ersten Randabschnitt 13a des umlaufenden Randes 13 kann mittels eines Laserverfahrens oder eines Fräsverfahrens erfolgen.

Das Einbringen des Farbmaterials 15 in die mindestens eine Aussparung 14 kann mittels eines Druckverfahrens oder eines Sprühverfahrens erfolgen.

## Patentansprüche

1. Kartenförmiger Datenträger (1), umfassend:
einen Kartenkörper (10), welcher eine erste Kartenoberfläche (11), eine zweite Kartenoberfläche (12) und einen umlaufenden Rand (13) aufweist;
wobei der umlaufende Rand (13) die erste Kartenoberfläche (11) mit der zweiten Kartenoberfläche (12) verbindet;
wobei der umlaufende Rand (13) einen ersten Randabschnitt (13a) mit mindestens einer Aussparung (14) aufweist;
wobei die mindestens eine Aussparung (14) zumindest teilweise mit einem Farbmaterial (15) gefüllt ist, um somit einen Farbeffekt für den ersten Randabschnitt (13a) bereitzustellen.

2. Kartenförmiger Datenträger (1) nach Anspruch 1,
wobei die mindestens eine Aussparung (14) in Form einer Vertiefung in dem ersten Randabschnitt (13a) vorgesehen ist, die sich senkrecht zur ersten Kartenoberfläche (11) und/oder zur zweiten Kartenoberfläche (12) erstreckt.

3. Kartenförmiger Datenträger (1) nach einem der vorhergehenden Ansprüche,
wobei die mindestens eine Aussparung (14) in Form einer Vertiefung in dem ersten Randabschnitt (13a) vorgesehen ist, die sich von der ersten Kartenoberfläche (11) zur zweiten Kartenoberfläche (12) erstreckt.

4. Kartenförmiger Datenträger (1) nach einem der vorhergehenden Ansprüche,
wobei die mindestens eine Aussparung (14) in Form einer länglichen Vertiefung in dem ersten Randabschnitt (13a) vorgesehen ist, die sich parallel zur ersten Kartenoberfläche (11) und/oder zur zweiten Kartenoberfläche (12) erstreckt.

5. Kartenförmiger Datenträger (1) nach einem der vorhergehenden Ansprüche,
wobei die mindestens eine Aussparung (14) in einem Querschnitt parallel zur ersten Kartenoberfläche (11) und/oder zur zweiten Kartenoberfläche (12) eine gekrümmte Form, eine rechteckige Form oder eine dreieckige Form aufweist; und/oder
wobei die mindestens eine Aussparung (14) in einem Querschnitt senkrecht zur ersten Kartenoberfläche (11) und/oder zur zweiten Kartenoberfläche (12) eine gekrümmte Form, eine rechteckige Form oder eine dreieckige Form aufweist.

6. Kartenförmiger Datenträger (1) nach einem der vorhergehenden Ansprüche,
wobei die mindestens eine Aussparung (14) durch einen abgesenkten Teil (14a) und zwei hervorstehende Teile (14b) definiert ist;
wobei die zwei hervorstehenden Teile (14b) an den abgesenkten Teil (14a) angrenzen;
wobei das Farbmaterial (15) zumindest in dem abgesenkten Teil (14a) vorgesehen ist.

7. Kartenförmiger Datenträger (1) nach einem der vorhergehenden Ansprüche,
wobei der erste Randabschnitt (13a) eine Vielzahl von Aussparungen (14) aufweist, die in regelmäßigen Abständen zueinander entlang des ersten Randabschnitts (13a) angeordnet sind;
wobei jede Aussparung (14) der Vielzahl von Aussparungen (14) zumindest teilweise mit einem Farbmaterial (15) gefüllt ist, um somit einen Farbeffekt für den ersten Randabschnitt (13a) bereitzustellen.

8. Kartenförmiger Datenträger (1) nach einem der vorhergehenden Ansprüche,
wobei der umlaufende Rand (13) den ersten Randabschnitt (13a), einen zweiten Randabschnitt (13b), einen dritten Randabschnitt (13c) und einen vierten Randabschnitt (13d) aufweist;
wobei der erste Randabschnitt (13a) bezüglich des Kartenkörpers (10) dem dritten Randabschnitt (13c) gegenüberliegt;
wobei der zweite Randabschnitt (13b) bezüglich des Kartenkörpers (10) dem vierten Randabschnitt (13d) gegenüberliegt.

9. Kartenförmiger Datenträger (1) nach Anspruch 8,
wobei sich die zumindest eine Aussparung (14) entlang des ersten Randabschnitts (13a), des zweiten Randabschnitts (13b), des dritten Randabschnitts (13c) und des vierten Randabschnitts (13d) erstreckt.

10. Kartenförmiger Datenträger (1) nach einem der vorhergehenden Ansprüche,
wobei das Farbmaterial (15) eine ultraviolettstrahlungshärtende Druckfarbe ist.

11. Verwendung eines kartenförmigen Datenträgers (1) nach einem der vorhergehenden Ansprüche als Ausweisdokument, Identitätsdokument, Chipkarte oder Bezahlkarte.

12. Verfahren zur Herstellung eines kartenförmigen Datenträgers (1), umfassend:
Bereitstellen eines Kartenkörpers (10), welcher eine erste Kartenoberfläche (11), eine zweite Kartenoberfläche (12) und einen umlaufenden Rand (13) aufweist, wobei der umlaufende Rand (13) die erste Kartenoberfläche (11) mit der zweiten Kartenoberfläche (12) verbindet (S10);
Vorsehen mindestens einer Aussparung (14) in einem ersten Randabschnitt (13a) des umlaufenden Randes (13, S20);
Einbringen eines Farbmaterials (15) in die mindestens eine Aussparung (14), um somit einen Farbeffekt für den ersten Randabschnitt (13a) bereitzustellen (S30).

13. Verfahren nach Anspruch 12,
wobei das Vorsehen der mindestens einen Aussparung (14) in dem ersten Randabschnitt (13a) des umlaufenden Randes (13) während eines Ausstanzens des Kartenkörpers (10) erfolgt.

14. Verfahren nach einem der Ansprüche 12 bis 13,
wobei das Vorsehen der mindestens einen Aussparung (14) in dem ersten Randabschnitt (13a) des umlaufenden Randes (13) mittels eines Laserverfahrens oder eines Fräsverfahrens erfolgt.

15. Verfahren nach einem der Ansprüche 12 bis 14,
wobei das Einbringen des Farbmaterials (15) in die mindestens eine Aussparung (14) mittels eines Druckverfahrens oder eines Sprühverfahrens erfolgt.
